# EUROPÄISCHE PATENTSCHRIFT

(11) **EP 3 481 592 B1**
(45) Veröffentlichungstag und Bekanntmachung des Hinweises auf die Patenterteilung: **29.01.2020**
(21) Anmeldenummer: 17731585.0
(22) Anmeldetag: 22.06.2017
(51) Int. Cl.: B25D 16/00, B25F 5/00, B23Q 11/00, F16D 59/02, F16D 121/22

(54) **HANDWERKZEUGMASCHINE**
HANDHELD MACHINE TOOL
MACHINE-OUTIL PORTATIVE

(30) Priorität: 06.07.2016 EP 16178070
(43) Veröffentlichungstag der Anmeldung: 15.05.2019
(73) Patentinhaber: Hilti Aktiengesellschaft, 9494 Schaan (LI)
(72) Erfinder: WIERER, Michael, 6700 Bludenz (AT); SCHAER, Roland, 9472 Grabs (CH); LORENZ, Philipp, 80333 München (DE)
(74) Vertreter: Hilti Aktiengesellschaft Corporate Intellectual Property
(86) Internationale Anmeldenummer: PCT/EP2017/065332
(87) Internationale Veröffentlichungsnummer: WO 2018/007152

(56) Entgegenhaltungen:
- EP-A2- 0 841 127
- US-A1- 2010 078 187

## Beschreibung

Die vorliegende Erfindung betrifft eine Handwerkzeugmaschine gemäß dem Oberbegriff des Anspruchs 1, insbesondere für Handwerkzeugmaschinen mit rotierenden stabförmigen Werkzeugen, wie Bohrhämmern, Elektroschraubern, etc.. Eine solche Handwerkzeugmaschine ist aus der EP 0 841 127 B1 bekannt.

Ein Bohrer oder ein Schrauberbit können plötzlich während des Betriebs blockieren. Das von dem Elektromotor ausgeübte Drehmoment überträgt sich daraufhin schlagartig auf die Hand des Anwenders. Hierbei besteht die Gefahr, dass der Anwender die Handwerkzeugmaschine nicht mehr kontrollieren kann und sich verletzt.

EP 0486843 B1, EP 0841126 B1, EP 0326783 B1, EP0841127B1 schlagen unterschiedliche mechanische Bremsen vor, im unbeherrschten Fall eine Welle zu bremsen. EP1219392B1 schlägt ein Trennen des Antriebsstrangs im unbeherrschten Fall vor. Die vorgeschlagenen Lösungen sind jedoch schwer und träge, insbesondere beim Rücksetzen in den beherrschbaren normalen Betrieb.

### OFFENBARUNG DER ERFINDUNG

Die Erfindung ist in Anspruch 1 definiert. Die erfindungsgemäße Handwerkzeugmaschine hat ein Maschinengehäuse, einen Werkzeughalter zum Haltern eines Werkzeuges, einen Elektromotor, eine Welle, die den Werkzeughalter und den Elektromotor verbindet und eine Schutzeinrichtung zum Stoppen des Werkzeughalters bei einer unbeherrschten Situation. Die Schutzeinrichtung beinhaltet einen Sensor zum Erkennen der unbeherrschten Situation, eine schaltbare Stromquelle und eine normal-schließende Magnetbremse. Die schaltbare Stromquelle gibt ansprechend auf Signale des Sensors einen von Null verschiedenen ersten Strom bei Nicht-Erkennen einer unbeherrschten Situation aus; die Stromquelle gibt keinen oder einen von dem ersten Strom verschiedenen zweiten Strom bei Erkennen einer unbeherrschten Situation aus. Die normal-schließende Magnetbremse, greift an die Welle an. Die normal-schließende Magnetbremse übt bestromt mit dem ersten Strom kein Drehmoment auf die Welle aus. Die normal-schließende Magnetbremse übt unbestromt oder bestromt mit dem zweiten Strom ein der Drehbewegung der Welle entgegenwirkendes, bremsendes Drehmoment aus.

Die normal-schließende Magnetbremse wird durch den ersten Strom Freilauf-Strom geöffnet. Der Freilauf-Strom fließt während des normalen Betriebs der Handwerkzeugmaschine durch die Magnetbremse. Sobald der Freilauf-Strom fehlt, schließt die Magnetbremse selbsttätig. Das Schließen erfolgt beispielsweise auch bei einem Ausfall der Stromversorgung unabhängig von jeder Steuerungselektronik. Der Freillauf-Strom ist vorzugsweise ein konstanter Gleichstrom.

Erfindungsgemäß weist die Magnetbremse eine in dem Maschinengehäuse stationär angeordnete Bremsbacke und eine relativ zu der Bremsbacke um die Achse der Welle drehbare, beispielsweise drehfest mit der Welle, und längs der Welle zwischen einer Freilauf-Stellung und einer Brems-Stellung verschiebbare Bremsscheibe auf. Die Bremsbacke bremst tribologisch die Bremsscheibe, welche an die Welle angebunden ist.

Erfindungsgemäß weist die Magnetbremse einen Permanentmagnet und eine Magnetspule auf. Der Permanentmagnet erzeugt ein permanentes Magnetfeld und die Magnetspule erzeugt mit dem ersten Strom ein (auslöschendes) Magnetfeld, welches antiparallel zu dem permanenten Magnetfeld ist. Das permanente Magnetfeld bewirkt das bremsende Drehmoment. Das auslöschende Magnetfeld wirkt dem permanenten Magnetfeld entgegen. Bei dem fließenden Freilauf-Strom löschen sich die beiden Magnetfelder weitgehend aus. Der Permanentmagnet kann einteilig oder mehrteilig ausgebildet sein.

Die Bremsbacke und der Permanentmagnet sind in einer von der Freilauf-Stellung zu der Brems-Stellung sich erstreckenden Verschlussrichtung von der Bremsscheibe angeordnet. Der Permanentmagnet zieht die Bremsscheibe zu der Bremsbacke, um die Magnetbremse zu schließen.

Eine Ausgestaltung sieht vor, dass ein Polschuh den der Permanentmagnet und die Magnetspule zum Führen der Magnetfelder umgibt. Die beiden Magnetfelder werden in räumlicher Nähe der Bremsscheibe zusammengeführt, wodurch eine gute Auslöschung der Magnetfelder erreichbar ist. Der Polschuh kann zwei ineinanderliegende ringförmige Vorsprünge aufweisen, welche der Bremsscheibe zugewandt sind.

Die Bremsscheibe ist vorzugsweise aus einem weichmagnetischen Material gebildet. Die Bremsscheibe reagiert somit rasch auf einen Wechsel der Magnetfeldstärke beim Öffnen bzw. Schließen der Magnetbremse.

Eine Ausführung sieht eine an die Bremsscheibe angelegte Feder vor. Die Feder übt eine von der Bremsbacke weggerichtete Kraft auf die Bremsscheibe aus. Die Feder kann ein Lösen der Bremsscheibe von der Bremsbacke begünstigen, insbesondere gegen die Schwerkraft.

Ein Steuerungsverfahren für die Handwerkzeugmaschine sieht folgende Schritte vor: Bestromen der Magnetbremse mit einem Freilauf-Strom; Ansteuern des Elektromotors zum Antreiben der Welle ansprechend auf ein Betätigen des Betriebstasters und nachdem die Magnetbremse bestromt ist; und Unterbrechen des Bestromens der Magnetbremse mit dem ersten Strom und Abkoppeln des Elektromotors von der Energieversorgung ansprechend auf ein Erkennen einer unbeherrschten Situation anzeigendes Signal des Sensors. Der Freilauf-Strom ist vorzugsweise konstant und allein durch die Magnetbremse vorgegeben, insbesondere unabhängig von einer einzustellenden Drehzahl oder Leistungsaufnahme der Handwerkzeugmaschine. Die Leistungsaufnahme der Handwerkzeugmaschine variiert in Abhängig der aktuell anliegenden Last.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: eine Magnetbremse
- Fig. 3: ein Steuerungsverfahren

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

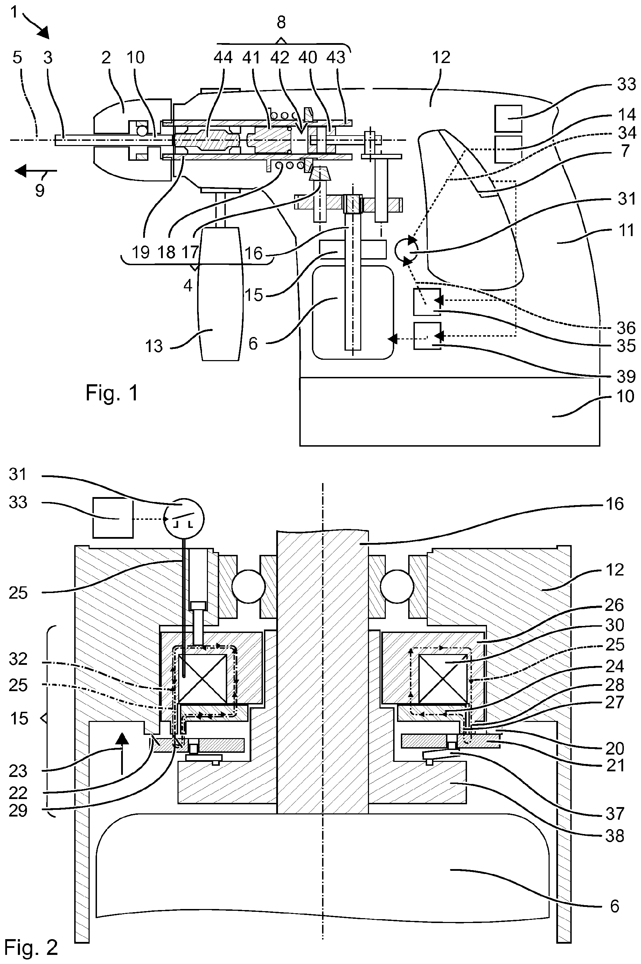

Fig. 1 zeigt als Beispiel einer handgeführten Werkzeugmaschine schematisch einen Bohrhammer **1.** Der Bohrhammer **1** hat einen Werkzeughalter **2**, in welchen ein Bohrer **3** oder anderes Werkzeug eingesetzt und verriegelt werden kann. Der beispielhafte Bohrhammer **1** hat einen Drehantrieb **4**, welcher den Werkzeughalter **2** um dessen Arbeitsachse **5** drehend antreibt. Der Drehantrieb **4** basiert auf einem Elektromotor **6**, den der Anwender über einen Betriebstaster **7** ein- und ausschalten kann. Ein zusätzliches Schlagwerk **8** kann periodisch in einer Schlagrichtung **9**, längs der Arbeitsachse **5** auf den Bohrer **3** schlagen. Das Schlagwerk **8** ist vorzugsweise von dem gleichen Elektromotor **6** angetrieben. Eine Energieversorgung kann über eine Batterie **10** oder eine Netzleitung erfolgen.

Der Bohrhammer **1** hat einen Handgriff **11**, der typischerweise an einem dem Werkzeughalter **2** abgewandten Ende eines Maschinengehäuses **12** des Bohrhammers **1** befestigt ist. Ein zusätzlicher Handgriff **13** kann beispielsweise nahe des Werkzeughalters **2** befestigt werden. Der Anwender kann den Bohrhammer **1** mit dem Handgriff während des Bohrens führen und halten. Die Drehzahl kann auf einen Sollwert geregelt sein. Während des Bohrens wirkt auf den Anwender typischerweise ein geringes rückwirkendes Drehmoment ein, welches aus dem Widerstand von Gestein gegenüber dem drehenden Bohrer **3** resultiert. Der Anwender kann die notwendige Haltekraft mühelos oder mit geringer Anstrengung aufbringen.

Der Bohrer **3** kann in dem Bohrloch blockieren, wodurch in Folge des sich weiterhin drehenden Drehantriebs **4** ein hohes Drehmoment auf den Werkzeughalter **2** ausgeübt wird. Das rückwirkende Drehmoment kann dabei ruckartig ansteigen und den Anwender und den Bohrhammer **1** schädigen. Um einer Verletzung des Anwenders und einer Beschädigung des Bohrhammers **1** vorzubeugen stoppt eine Schutzeinrichtung **14** automatisch den standardmäßigen Betrieb des Bohrhammers **1.** Die Schutzeinrichtung **14** bremst bei dem Störfall den Drehantrieb **4** mittels einer Magnetbremse **15.**

Der Drehantrieb **4** ist starr mit dem Werkzeughalter **2** gekoppelt. Der beispielhafte Drehantrieb **4** beinhaltet eine (Motor-) Welle **16**, ein untersetzendes Getriebe **17** und eine Rutschkupplung **18** und Abtriebswelle **19.** Die beispielhafte Abtriebswelle **19** ist hohl gestaltet.

Die Magnetbremse **15** ist auf der Welle **16** angeordnet. Vorzugsweise ist die Welle **16** zwischen dem Elektromotor **6** und dem Getriebe **17** angeordnet. Die Welle **16** dreht sich mit der gleichen Drehzahl wie der Elektromotor **6.**

Die Magnetbremse **15** hat eine Bremsbacke **20** und eine Bremsscheibe **21.** Die Bremsbacke **20** ist stationär in dem Maschinengehäuse **12** angeordnet. Die Bremsbacke **20** hat eine ringförmige Reibfläche **22**, welche der Bremsscheibe **21** zugewandt angeordnet ist. Die Bremsscheibe **21** ist drehstarr mit der Welle **16** verbunden. Die Bremsscheibe **21** ist axial beweglich gelagert. Die Bremsscheibe **21** kann zwischen einer Freilauf-Stellung (Fig. 2, linke Bildhälfte) und einer Brems-Stellung (Fig. 2, rechte Bildhälfte) und vice versa verschoben werden. Die Richtung von der Freilauf-Stellung zu der Brems-Stellung wird nachfolgend als Verschlussrichtung **23** bezeichnet. Die Bremsscheibe **21** ist in der Freilauf-Stellung von der Bremsbacke **20** beabstandet. Die Bremsbacke **20** übt kein Drehmoment auf die Bremsscheibe **21** aus. Die Welle **16** kann sich frei drehen. Die Bremsscheibe **21** liegt in der Brems-Stellung an einer Reibfläche **22** der Bremsbacke **20** an. Der Reibwert zwischen der Bremsbacke **20** und der Bremsscheibe **21** ist vorzugsweise sehr hoch. Die Bremsbacke **20** übt ein Drehmoment gegen eine Drehbewegung der Bremsscheibe **21** aus. Die Bremsscheibe **21** und die an ihr angebundene Welle **16** werden gebremst.

Die Bremsscheibe **21** ist aus einem weichmagnetischen und vorzugsweise ferromagnetischen Material. Die Bremsscheibe **21** wird durch eine Reluktanzkraft in Verschlussrichtung **23** an die Bremsbacke **20** angedrückt.

Die Magnetbremse **15** hat einen Permanentmagnet **24**, welcher ein permanentes Magnetfeld **25** erzeugt. Der Permanentmagnet **24** ist in Verschlussrichtung **23** von der Bremsscheibe **21** angeordnet, also auf der gleichen Seite der Bremsscheibe **21** wie die Bremsbacke **20.** Das permanente Magnetfeld **25** durchströmt die Bremsscheibe **21.** Zwischen der Bremsscheibe **21** und dem Permanentmagnet **24** ist ein Luftspalt, welcher in der Freilauf-Stellung größer als in der Brems-Stellung ist. Gemäß dem Reluktanzprinzip zieht der Permanentmagnet **24** die Bremsscheibe **21** in Verschlussrichtung **23** in die Brems-Stellung.

Der Permanentmagnet **24** kann mit einem Polschuh **26** versehen sein, welcher eine Führung des permanenten Magnetfeldes **25** zu der Bremsscheibe **21** begünstigt. Der beispielhafte Polschuh **26** hat zwei ringförmige Vorsprünge **27, 28** welche ineinanderliegend, z.B. konzentrisch, angeordnet und durch einen ringförmigen Luftspalt separiert sind. Die beiden Vorsprünge **27, 28** stehen entgegen der Verschlussrichtung **23** vor, d.h. in Richtung zu der Bremsscheibe **21.** Das permanente Magnetfeld **25** tritt bei dem einen Vorsprung **27** aus und bei dem anderen Vorsprung **28** ein. Bei der Brems-Stellung liegt die Bremsscheibe **21** an beiden Vorsprüngen **27, 28** an oder ist in einem sehr geringen Abstand zu deren Ringflächen **29**, vorzugsweise ist der Abstand geringer als 0,5 mm. Die Bremsscheibe **21** schließt den magnetischen Fluss bzw. verringert den Luftspalt. Der Luftspalt ist in der Freilauf-Stellung deutlich, z.B. zehnfach größer. Die Führung des permanenten Magnetfeldes **25** kann auch einen Vorsprung **27** und die Bremsbacke **20** erfolgen, welche ebenfalls zwei ineinanderliegende, durch einen Luftspalt separierte Ringe ausbilden.

Die von dem Permanentmagnet **24** auf die Bremsscheibe **21** ausgeübte in die Verschlussrichtung **23** wirkende Reluktanzkraft ist vorzugsweise ausreichend um in Kombination mit dem Reibwert ein ausreichendes Drehmoment zum Stoppen der Welle **16** zu bewirken. Die Magnetbremse **15** ist in ihrem unbestromten Zustand geschlossen.

Die Magnetbremse **15** hat eine Magnetspule **30.** Die Magnetspule **30** ist vorzugsweise zusammen mit dem Permanentmagnet **24** auf der gleichen Seite der Bremsscheibe **21** angeordnet wie die Bremsbacke **20**. Die Magnetspule **30** ist mit einer Stromquelle **31** verbunden. Die Stromquelle **31** kann einen ersten Strom **I1** (Freilauf-Strom **I1**) in die Magnetspule **30** einspeisen. Die von dem Freilauf-Strom **I1** durchflossene Magnetspule 30 erzeugt ein (auslöschendes) Magnetfeld **32**, welches das permanente Magnetfeld **32**, zumindest in der Umgebung der Bremsscheibe **21**, vollständig oder nahezu auslöscht. Das permanente Magnetfeld **32** und das auslöschende Magnetfeld **32** haben die gleiche magnetische Flussdichte aber umgekehrte Flussrichtung nahe der Bremsscheibe **21**, beispielsweise an den ringförmigen Vorsprüngen **27**, **28.** Die Flussdichten unterscheiden sich beispielsweise um weniger als 10 %. Die Reluktanzkraft ist aufgehoben. Die Magnetbremse **15** ist geöffnet und gibt die Welle **16** frei. Das Geöffnethalten der Magnetbremse **15** erfordert das Bestromen mit dem kontinuierlichen und konstanten Freilauf-Strom **I1.** Der energetische Verlust liegt beispielsweise im Bereich von 2 Watt bis 20 Watt.

Der Strom **I** der Stromquelle **31** ist schaltbar. Die Stromquelle **31** kann in einer Schaltstellung den Freilauf-Strom **I1** ausgeben und in einer anderen Schaltstellung einen zweiten Strom **I2** ausgeben. Der Wechsel zwischen den beiden Strompegeln kann kontinuierlich oder diskret erfolgen. Der zweite Strom **I2** ist vorzugsweise deutlich geringer als der Freilauf-Strom **I1**, beispielsweise geringer als 20 % des Freilaufstroms. Besonders bevorzugt ist, den zweiten Strom **I2** auf Null zu setzen. Im Wesentlichen nur der Permanentmagnet **24** ist wirksam. Der Permanentmagnet **24** schließt die Magnetbremse **15.** Die Magnetbremse **15** entfaltet ihr bremsendes Drehmoment, ohne Energie zu verbrauchen. Falls ein erhöhtes bremsendes Drehmoment notwendig ist, kann der zweite Strom **I2** eine zu dem Freilauf-Strom **I1** umgekehrte Polarität aufweisen, da in diesem Fall die Magnetspule **30** die Reluktanzkraft erhöht. Bei einem Wechsel von dem geschlossenen Stellung der Magnetbremse **15** in die geöffnete Stellung kann zwischenzeitlich ein größerer Strom als der Freilauf-Strom **I2** eingespeist werden. Das Überwinden der magnetischen Kräfte erfordert beim Öffnen des Luftspalts typischerweise eine größere Kraft als anschließend beim Halten der geöffneten Stellung.

Das schaltbare Magnetfeld **32** ist vorzugsweise durch den gleichen Polschuh **26** geführt. Der Polschuh **26** kann um die Magnetspule **30** angeordnet sein. Der Permanentmagnet **24** kann einen Abschnitt des Polschuhs **26** bilden. Die Bremsbacke **20** kann ebenfalls zum Führen des Magnetfeldes **25** genutzt werden.

Die beispielhafte Schutzeinrichtung **14** beinhaltet einen Bewegungssensor **33.** Der Bewegungssensor **33** ist beispielsweise an oder nahe des Handgriffs **13** angeordnet. Der Bewegungssensor **33** erfasst eine Drehbewegung des Handgriffs **13** um die Arbeitsachse **5.** Ein beispielhafter Bewegungssensor **33** ist ein Gyrosensor, welcher unmittelbar eine Winkelgeschwindigkeit basierend auf einer durch die Drehbewegung ausgeübte Corioliskraft ermittelt. Der Gryrosensor kann beispielsweise ein schwingendes Plättchen enthalten, dessen Schwingungsfrequenz durch die Corioliskraft verändert wird. Ein alternativer Bewegungssensor **33** erfasst eine Beschleunigung an zwei versetzten Orten in dem Bohrhammer **1** und ermittelt aus der Differenz die Drehbewegung des Bohrhammers **1.**

Die Schutzeinrichtung **14** wertet die Drehbewegung dahingehend aus, ob eine unkontrollierte Drehbewegung des Bohrhammers **1** um die Arbeitsachse **5** oder ein durch den Anwender verursachtes Verschwenken des Bohrhammers **1** um die Arbeitsachse **5** vorliegt. Die Schutzeinrichtung **14** gibt ein Bremssignal **34** an die Magnetbremse **15** bzw. Stromquelle **31** aus, wenn eine unkontrollierte Drehbewegung erkannt ist.

Die Schutzeinrichtung **14** kann zum Erkennen der unkontrollierten Drehbewegung beispielsweise die Winkelgeschwindigkeit um die Arbeitsachse **5** auswerten. Ein beispielhaftes Kriterium ist, wenn die Winkelgeschwindigkeit einen Schwellwert überschreitet, der in typischen Anwendungen nicht überschritten wird. Ein weiteres Kriterium ist, wenn ein vorgegebener Drehwinkel innerhalb einer vorgegebener Zeitspanne überschritten wird, z.B. weil der Bohrhammer **1** sich fortlaufend gegen die Haltekraft des Anwenders verdreht. Die Kriterien können verschiedene Paarungen aus Winkelgeschwindigkeit und Drehwinkel mit geeigneten Schwellwerten und Beobachtungszeiträumen beinhalten.

Die Schutzeinrichtung **14** kann einen Stromsensor beinhalten. Der Stromsensor überwacht die Leistungsaufnahme des Elektromotors **6.** Überschreitet die Leistungsaufnahme, insbesondere der Strom, einen Schwellwert, deutet dies auf einen Störfall oder unbeherrschte Situation hin. Die Schutzeinrichtung **14** kann in diesem Fall das Bremssignal **34** ausgeben. Weitere Sensoren zum Erkennen einer unkontrollierten Situation können verwendet werden.

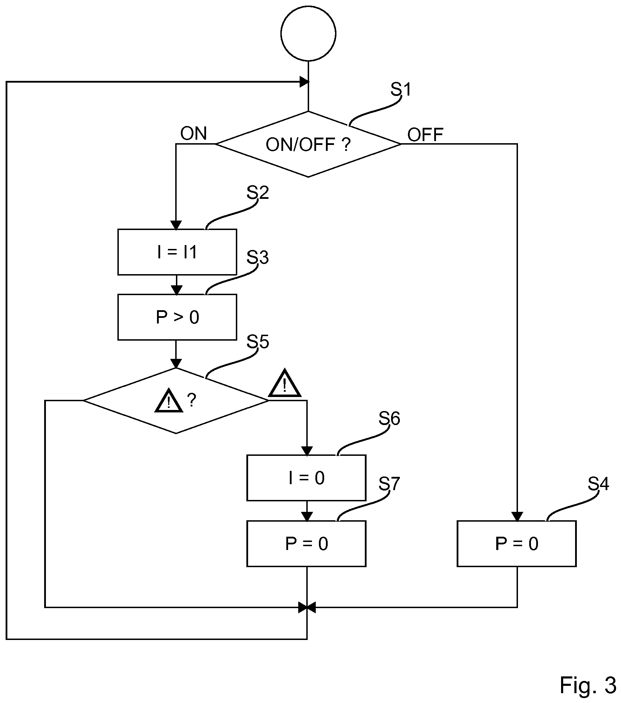

Ein beispielhaftes Steuerungsverfahren für die Handwerkzeugmaschine **1** ist schematisch in Fig. 3 zusammengestellt. Ansprechend auf ein Betätigen des Betriebstasters **7** (Schritt **S1**) wird zuerst die Magnetbremse **15** gelöst (Schritt **S2**), z.B. indem eine Steuerungseinheit **35** aktiviert wird. Eine Steuerungseinheit **35** gibt ein Freigabe-Signal **36** an die Magnetbremse **15** bzw. die Stromquelle **31** aus. Die Stromquelle **31** speist daraufhin den Freilauf-Strom **I1** in die Magnetspule **30** ein. Die Magnetbremse **15** öffnet. Nachfolgend wird der Elektromotor **6** mit Energie **P** zum Antreiben der Welle **16** und des Werkzeughalters **2** und ggf. des Schlagwerks **8** versorgt (Schritt **S3**). Das Öffnen der Magnetbremse **15** und das Versorgen des Elektromotors **6** erfolgt nacheinander. Die Handwerkzeugmaschine **1** ist im Betrieb, solange wie der Betriebstaster **7** gedrückt ist. Sobald der Anwender den Betriebstaster **7** löst, wird Elektromotor **6** von der Energieversorgung **10** getrennt und die Handwerkzeugmaschine **1** stellt den Betrieb ein (Schritt **S4**).

Die Schutzeinrichtung **14** überprüft während des Betriebs, ob der Bewegungssensor **33** oder ein anderer Sensor eine unkontrollierte Situation meldet (Schritt **S5**). Sofern keine unkontrollierte Situation vorliegt, bleibt der Elektromotor **6** in Betrieb und die Magnetbremse **15** geöffnet. Erkennt die Schutzeinrichtung **14** eine unkontrollierte Situation, gibt die Schutzeinrichtung **14** das Bremssignal **34** an die Magnetbremse **15** aus. Die Stromquelle **31** schaltet den Freilauf-Strom **I1** ab. Beispielsweise wird die Stromquelle **31** von der Magnetspule **30** getrennt, so dass der Strom **I** auf Null abfällt (Schritt **S6**)**.** Der Werkzeughalter **2** ist zum Stillstand gebracht. Der Anwender kann die Magnetbremse **15** wieder lösen, indem der Betriebstaster **7** gelöst und erneut betätigt wird.

Der Elektromotor **6** kann zeitgleich mit dem Bremsen von der Energieversorgung **10** getrennt werden (Schritt **S7**). Alternativ oder ergänzend kann der Elektromotor **6** ein bremsendes Drehmoment ausüben. Beispielsweise können die Wicklungen des Elektromotors **6** über einen Lastwiderstand kurzgeschlossen werden. Der von dem generatorisch wirkenden Elektromotor **6** erzeugte elektrische Strom wird in dem Lastwiderstand in Wärme umgewandelt. Alternativ oder ergänzend kann zwischen dem Elektromotor **6** und der Magnetbremse **15** eine mechanische Überlastkupplung angeordnet sein, welche bei der betätigten Magnetbremse **15** den Elektromotor **6** von der Welle **16** trennt. Ein Trennen des Elektromotor **6** kann verzögert erfolgen oder erst bei Lösen des Betriebstasters **7** durch den Anwender.

Die Magnetbremse **15** kann auch bereits geöffnet werden, bevor der Anwender den Betriebstaster **7** betätigt. Beispielsweise erkennt der Bewegungssensor **33** anhand von Erschütterungen, dass der Anwender die Handwerkzeugmaschine **1** in der Hand hält und führt. Ansprechend auf das Erkennen des Führens der Handwerkzeugmaschine **1** durch den Anwender wird die Magnetbremse **15** geöffnet. Die Magnetbremse **15** kann geschlossen werden, wenn die Handwerkzeugmaschine **1** für eine vorbestimmte Zeit inaktiv war.

Die Bremsscheibe **21** kann mittels einer Feder **37** entgegen der Verschlussrichtung **23** vorgespannt sein. Die Federkraft ist deutlich geringer als die durch den Permanentmagneten **24** ausgeübte Reluktanzkraft, z.B. geringer als 10 %. Die Federkraft entspricht etwa der Gewichtskraft der Bremsscheibe **21**, um gegebenenfalls die Bremsscheibe **21** entgegen der Schwerkraft in die geöffnete Schaltung zu bewegen. Dies kann notwendig sein, da der Permanentmagnet **24** und die Magnetspule **30** limitiert auf das Reluktanzprinzip keine Kraft entgegen der Verschlussrichtung **23** erzeugen können.

Die Federn **37** können beispielsweise durch Blattfedern realisiert sein, welche im Wesentlichen parallel zu der Bremsscheibe **21** verlaufen. Jeweils ein Ende einer Blattfeder ist mit der Bremsscheibe **21** und ein anderes Ende der Blattfeder ist mit einer Trägerplatte **38** verbunden. Die Trägerplatte **38** ist über einen Presssitz oder in anderer Weise starr mit der Welle **16** befestigt. Die Federn **37** ermöglichen einerseits die axiale Bewegung der Bremsscheibe **21** und andererseits übertragen die Federn **37** ungedämpft das zwischen Welle **16** und Bremsbacke **20** wirkende Drehmoment. Vielfältige andere Konstruktionen sind möglich, um eine axiale Beweglichkeit bei gleichzeitig starrer rotatorischer Anbindung zum Übertragen eines Drehmoments zu erreichen. Beispielsweise kann die Bremsscheibe **21** in axialen Nuten der Welle **16** geführt sein.

Der Anwender kann den Drehantrieb **4** mit dem Betriebstaster **7** ein- und ausschalten. Der beispielhafte Betriebstaster **7** hat eine deaktivierende Schaltstellung und eine oder mehrere aktivierende Schaltstellung. Der Anwender kann beispielsweise durch Wahl seiner Betätigungskraft eine der aktivierenden Schaltstellungen auswählen. Die verschiedenen Schaltstellungen können mit unterschiedlichen Drehzahlen des Drehantriebs **4** assoziiert sein, welche zu unterschiedlicher Leistungsaufnahme **P** des Elektromotors **6** führen. Eine Motorsteuerung **39** kann die Leistungsaufnahme und den entsprechenden Stromfluss in dem Elektromotor **6** derart ändern, dass sich eine konstante Drehzahl **N** einstellt. Die Leistungsaufnahme **P** kann sich bei konstanter Drehzahl **N** durch unterschiedliche Last ändern. Der Stromfluss in dem Elektromotor **6** variiert daher während des Betriebs. Die Begrenzung der Leistungsaufnahme oder die Drehzahl kann beispielsweise durch den Anwender und die Stärke der Betätigung des Betriebstasters **7** vorgegeben werden.

Der Elektromotor **6** kann ein Universalmotor, ein mechanisch kommutierender Elektromotor **6** oder ein elektrisch kommutierender Elektromotor **6** sein. Die Motorsteuerung **39** entkoppelt den Elektromotor **6** von der Energieversorgung, wenn der Betriebstaster **7** in der deaktivierenden Stellung ist.

Das Schlagwerk **8** ist beispielsweise ein pneumatisches Schlagwerk. Ein Erregerkolben **40** wird durch den Elektromotor **6** in eine periodische Vor- und Zurückbewegung längs der Arbeitsachse **5** gezwungen. Ein auf der Arbeitsachse **5** laufender Schläger **41** ist über eine Luftfeder an den Erregerkolben **40** angekoppelt. Die Luftfeder ist durch eine von dem Erregerkolben **40** und dem Schläger **41** abgeschlossene pneumatische Kammer **42** gebildet. Der Erregerkolben **40** und der Schläger **41** können in einem Führungsrohr **43** geführt sein, welches zugleich die pneumatische Kammer **42** in radialer Richtung abschließt. Ein Döpper **44** kann in Schlagrichtung **9** von dem Schläger **41** angeordnet sein. Der Schläger **41** schlägt auf den Döpper **44**, welcher den Schlag auf den in dem Werkzeughalter **2** liegenden Bohrer **3** weiterleitet.

## Patentansprüche

1. Handwerkzeugmaschine (1) mit einem Maschinengehäuse (12), einem Werkzeughalter (2) zum Haltern eines Werkzeuges, einem Elektromotor (6), einer Welle (16), die den Werkzeughalter (2) und den Elektromotor (6) verbindet und einer Schutzeinrichtung (14) zum Stoppen des Werkzeughalters (2) bei einer unbeherrschten Situation, wobei die Schutzeinrichtung (14) beinhaltet:
einen Sensor (33) zum Erkennen der unbeherrschten Situation,
eine schaltbare Stromquelle (31), welche ansprechend auf Signale des Sensors (33) einen von Null verschiedenen ersten Strom (I1) bei Nicht-Erkennen einer unbeherrschten Situation ausgibt und die keinen oder einen von dem ersten Strom (I1) verschiedenen zweiten Strom (I2) bei Erkennen einer unbeherrschten Situation ausgibt, und
eine an der Welle (16) angreifende, normal-schließende Magnetbremse (15), die bestromt mit dem ersten Strom (I1) kein Drehmoment auf die Welle (16) ausübt und die unbestromt oder bestromt mit dem zweiten Strom (I2) ein der Drehbewegung der Welle (16) entgegenwirkendes Drehmoment ausübt, **dadurch gekennzeichnet, dass** die Magnetbremse (15) eine in dem Maschinengehäuse (12) stationär angeordnete Bremsbacke (20) und eine relativ zu der Bremsbacke (20) um die Achse der Welle (16) drehbare und längs der Welle (16) zwischen einer Freilauf-Stellung und einer Brems-Stellung verschiebbare Bremsscheibe (21) aufweist, wobei die Magnetbremse (15) einen Permanentmagnet (24) und eine Magnetspule (30) aufweist und wobei das von dem Permanentmagnet (24) erzeugt permanente Magnetfeld (25) und das von der von dem ersten Strom (11) durchflossenen Magnetspule (30) erzeugte Magnetfeld (32) antiparallel sind,
und wobei die Bremsbacke (20) und der Permanentmagnet (24) in einer von der Freilauf-Stellung zu der Brems-Stellung sich erstreckenden Verschlussrichtung (23) von der Bremsscheibe (21) angeordnet sind.

2. Handwerkzeugmaschine (1) nach Anspruch 1, **dadurch gekennzeichnet, dass** ein Polschuh (26) den Permanentmagnet (24) und die Magnetspule zum Führen der Magnetfelder umgibt.

3. Handwerkzeugmaschine (1) nach Anspruch 1 oder 2, **dadurch gekennzeichnet, dass** der Polschuh (26) zwei ineinanderliegende ringförmige Vorsprünge (28) aufweist, welche der Bremsscheibe (21) zugewandt sind.

4. Handwerkzeugmaschine (1) nach wenigstens einem der Ansprüche 1 bis 3, **dadurch gekennzeichnet, dass** eine Flussdichte des permanenten Magnetfeldes an der Ringfläche (29) unterscheidet sich betragsmäßig um weniger als 10 % von der Flussdichte des schaltbaren Magnetfeldes an der Ringfläche (29).

5. Handwerkzeugmaschine (1) nach wenigstens einem der Ansprüche 1 bis 4, **dadurch gekennzeichnet, dass** die Bremsscheibe (21) aus einem weichmagnetischen Material gebildet ist.

6. Handwerkzeugmaschine (1) nach wenigstens einem der Ansprüche 1 bis 5, **gekennzeichnet durch** eine an die Bremsscheibe (21) angelegte Feder (37), welche eine von der Bremsbacke (20) weggerichtete Kraft auf die Bremsscheibe (21) ausübt.

## Claims

1. Handheld machine tool (1) comprising a machine housing (12), a tool holder (2) for holding a tool, an electric motor (6), a shaft (16) which connects the tool holder (2) and the electric motor (6), and a protection device (14) for stopping the tool holder (2) in the case of an uncontrolled situation, wherein the protection device (14) contains:
a sensor (33) for identifying the uncontrolled situation,
a switchable power source (31) which, in response to signals of the sensor (33), outputs a first current (I1), which is different from zero, when an uncontrolled situation is not identified and which does not output any current or outputs a second current (12), which is different from the first current (I1), when an uncontrolled situation is identified, and
a normally-closed magnetic brake (15) which acts on the shaft (16) and, when energized with the first current (I1), does not exert any torque onto the shaft (16) and, when not energized or energized with the second current (12), exerts a torque which counters the rotational movement of the shaft (16), **characterized in that** the magnetic brake (15) has a brake shoe (20), which is arranged in a stationary manner in the machine housing (12), and a brake disc (21), which can be rotated relative to the brake shoe (20) about the axis of the shaft (16) and can be displaced along the shaft (16) between a freewheeling position and a braking position, wherein the magnetic brake (15) has a permanent magnet (24) and a magnet coil (30), and wherein the permanent magnetic field (25), which is generated by the permanent magnet (24), and the magnetic field (32), which is generated by the magnet coil (30) through which the first current (11) flows, are antiparallel, and wherein the brake shoe (20) and the permanent magnet (24) are arranged in a closure direction (23) of the brake disc (21), which closure direction extends from the freewheeling position to the braking position.

2. Handheld machine tool (1) according to Claim 1, **characterized in that** a pole shoe (26) surrounds the permanent magnet (24) and the magnet coil for guiding the magnetic fields.

3. Handheld machine tool (1) according to Claim 1 or 2, **characterized in that** the pole shoe (26) has two annular projections (28) which are situated one in the other and face the brake disc (21).

4. Handheld machine tool (1) according to at least one of Claims 1 to 3, **characterized in that** a flux density of the permanent magnetic field on the annular surface (29) differs in terms of magnitude by less than 10% from the flux density of the switchable magnetic field on the annular surface (29) .

5. Handheld machine tool (1) according to at least one of Claims 1 to 4, **characterized in that** the brake disc (21) is formed from a soft-magnetic material.

6. Handheld machine tool (1) according to at least one of Claims 1 to 5, **characterized by** a spring (37) which bears against the brake disc (21) and exerts a force, which is directed away from the brake shoe (20), onto the brake disc (21).

## Revendications

1. Machine-outil à main (1) comprenant un boîtier de machine (12), un porte-outil (2) pour supporter un outil, un moteur électrique (6), un arbre (16) qui relie le porte-outil (2) et le moteur électrique (6) et un dispositif de protection (14) pour arrêter le porte-outil (2) dans le cas d'une situation non maîtrisée, le dispositif de protection (14) contenant :
un capteur (33) pour détecter la situation non maîtrisée,
une source de courant commutable (31), qui, en réponse à des signaux du capteur (33), fournit un premier courant (I1) différent de zéro en cas de non détection d'une situation non maîtrisée et qui ne fournit aucun courant ou un deuxième courant (I2) différent du premier courant (I1) à la détection d'une situation non maîtrisée, et
un frein magnétique (15) fermant normalement, agissant sur l'arbre (16), qui, lorsqu'il est alimenté avec le premier courant (I1), n'exerce aucun couple sur l'arbre (16) et qui, lorsqu'il n'est pas alimenté ou qu'il est alimenté avec le deuxième courant (I2), exerce un couple s'opposant au mouvement de rotation de l'arbre (16),
**caractérisée en ce que** le frein magnétique (15) présente une mâchoire de frein (20) disposée de manière stationnaire dans le boîtier de machine (12) et un disque de frein (21) pouvant tourner par rapport à la mâchoire de frein (20) autour de l'axe de l'arbre (16) et pouvant être déplacé le long de l'arbre (16) entre une position de roue libre et une position de freinage,
le frein magnétique (15) présentant un aimant permanent (24) et une bobine magnétique (30) et le champ magnétique permanent (25) généré par l'aimant permanent (24) et le champ magnétique (32) généré par la bobine magnétique (30) parcourue par le premier courant (11) étant antiparallèles, et la mâchoire de frein (20) et l'aimant permanent (24) étant disposés dans une direction de fermeture (23) du disque de frein (21) s'étendant depuis la position de roue libre vers la position de freinage.

2. Machine-outil à main (1) selon la revendication 1, **caractérisée en ce qu'**une pièce polaire (26) entoure l'aimant permanent (24) et la bobine magnétique pour guider les champs magnétiques.

3. Machine-outil à main (1) selon la revendication 1 ou 2, **caractérisée en ce que** la pièce polaire (26) présente deux saillies de forme annulaire (28) situées l'une dans l'autre qui sont tournées vers le disque de frein (21).

4. Machine-outil à main (1) selon au moins l'une quelconque des revendications 1 à 3, **caractérisée en ce qu'**une densité de flux du champ magnétique permanent au niveau de la surface annulaire (29) diffère en valeur absolue de moins de 10 % de la densité de flux du champ magnétique commutable au niveau de la surface annulaire (29).

5. Machine-outil à main (1) selon au moins l'une quelconque des revendications 1 à 4, **caractérisée en ce que** le disque de frein (21) est formé d'un matériau magnétique doux.

6. Machine-outil à main (1) selon au moins l'une quelconque des revendications 1 à 5, **caractérisée par** un ressort (37) appliqué contre le disque de frein (21), qui exerce une force orientée à l'écart de la mâchoire de frein (20) sur le disque de frein (21).
